# EUROPÄISCHE PATENTSCHRIFT

(11) **EP 1 639 960 B1**
(45) Veröffentlichungstag und Bekanntmachung des Hinweises auf die Patenterteilung: **27.05.2009**
(21) Anmeldenummer: 05017008.3
(22) Anmeldetag: 04.08.2005
(51) Int. Cl.: A61C 7/02

(54) **Vorrichtung zur Entfernung von Zahnapplikationen wie Brackets**
Device for removing tooth applications such as brackets
Dispositif pour détacher des applications pour les dents comme des brackets

(30) Priorität: 27.09.2004 DE 102004046848
(43) Veröffentlichungstag der Anmeldung: 29.03.2006
(73) Patentinhaber: Ferton Holding SA, 2800 Delemont (CH)
(72) Erfinder: Meissner, Rolf, 1182 Gilly (CH); Menne, Andreas, 1274 Signy (CH)
(74) Vertreter: Müller, Hans-Jürgen

(56) Entgegenhaltungen:
- WO-A-98/57707
- US-A- 0 477 411
- US-A- 2 098 495
- US-A- 5 094 617
- US-A- 5 106 302
- US-B1- 6 382 965

## Beschreibung

Die vorliegende Erfindung betrifft eine Vorrichtung zur Entfernung von Zahnapplikationen wie Brackets nach dem Oberbegriff des Patentanspruches 1.

Derartige Verfahren und Vorrichtungen sind bsw. aus der US-6 382 965 B1 bekannt. Bei der medizinischen oder kosmetischen Behandlung von Zähnen ist es oftmals notwendig, Zahnapplikationen wie Brackets, Schmucksteine oder andere Einzelteile auf der Außenfläche des Zahns mittels eines Klebstoffs zu befestigen. Brackets sind Bestandteile einer Zahnspange. Sie werden auch als orthodontische Klammern bezeichnet. Ihre Aufgabe ist es, den umlaufenden Drahtbogen einer Zahnspange aufzunehmen und durch den dabei ausgeübten Druck den Zahn in die gewünschte Position zu drücken. Zu diesem Zweck müssen derartige Zahnapplikationen entsprechend fest und dauerhaft mit dem Zahn verbunden werden. Zum Einsatz kommen Materialien aus Metall, Kunststoff, Keramik oder Kombinationen aus diesen Werkstoffen, je nach medizinischem oder kosmetischem Anwendungsgebiet.

Zur Entfernung entsprechender Zahnapplikationen ist es bsw. nach der US-6 382 965 B1 bekannt, speziell geformte Zangen einzusetzen, mit denen die Brackets von der Zahnoberfläche abgehebelt oder abgeschert werden. Aus der EP 0 656 195 B1 ist das Bracket mit einer Rille ausgestattet, in die ein leicht zerbrechlicher Steg eingearbeitet ist, der als Sollbruchstelle fungiert. Beim Entfernen des Brackets wird durch das Zusammendrücken der äußeren Teile mit einer Zange ein Teil der Klebefläche von der Zahnoberfläche abgehoben, das Bracket aber zerstört.

Bei diesen Arten der Entfernung von Zahnapplikationen werden verhältnismäßig große Kräfte auf die Zahnoberfläche ausgeübt. Auf Grund der soliden Befestigung auf dem Zahn ist das Lösen solcher Zahnapplikationen entsprechenden aufwändig und wird von den Kunden oder Patienten oft als sehr schmerzhaft empfunden. Auch können Teile des Zahnschmelzes mit abgelöst, oder aufgesetzte Kronen beschädigt werden. Im Übrigen ist der Zugang im hinteren Mundbereich mit einer Zange oft nur eingeschränkt möglich, so dass diese Verfahren hierfür nur schlecht eingesetzt werden können.

In der EP 0 456 401 wird vorgeschlagen, das Bracket aufzuheizen, um damit die Klebeverbindung zu schwächen und das Lösen zu vereinfachen. Nachteilhaft ist es dabei, dass das Erhitzen von menschlichem Gewebe immer mit Gefahren verbunden ist. Das dort vorgestellte Gerät benötigt außerdem speziell für diese Anwendung ausgeformte Brackets, die auf Grund der mangelnden Wärmeleitfähigkeit von Kunststoffen und Keramiken in der Regel aus Metall bestehen müssen.

Bei den bisher bekannten Vorrichtungen und Verfahren ist eine Aufarbeitung der Brackets für eine erneute Wiederverwendung auf Grund der mechanischen Beschädigungen beim Entfernen nur bedingt möglich. Aus Kostengründen wäre dies aber wünschenswert. Auch beim Entfernen von Schmucksteinen ist eine Beschädigung dieser Steine oftmals nicht auszuschließen, so dass auch hier eine Wiederverwendung nur eingeschränkt möglich ist.

Eine Vorrichtung der im Oberbegriff des Patentanspruchs 1 genannten Gattung ist bereits seit über einem Jahrhundert bekannt (US 4,774,11). Darüber hinaus ist es bekannt (US 5,106, 302) Zahnapplikationen durch ein piezoelektrisch in Schwingung gebrachtes Gerät vom Zahn zu entfernen. Auch Verfahren zum Aufschmelzen von mit Klebemitteln am Zahn befestigten Applikationen, mit Ultraschallvorrichtungen und mit Vorrichtungen mit sich drehenden Werkzeugteilen (US 5,094,617) sind bereits bekannt.

Der Erfindung liegt die Aufgabe zugrunde, das Lösen von Zahnapplikationen schmerzfrei, einfach und schnell durchführen zu können, ohne dabei Schäden am Zahn oder an der Zahnapplikation zu verursachen.

Die Erfindung ist im Patentanspruch 1 gekennzeichnet. Weitere Verbesserungen sind in Unteransprüchen beansprucht. Vorteilhafte Ausgestaltungen ergeben sich auch aus der folgenden Beschreibung einschließlich der Zeichnung.

An sich ist es bereits bekannt (WO98/57707), durch Schlagteile erzeugte Stosswellen zur therapeutischen Behandlung von Tennisellenbogen, Fersensporn oder auch bei Parodontose zu verwenden. Bei der Erfindung wird dieses Prinzip dagegen zur Lösung der o. g. und bereits seit Jahrzehnten bekannten Aufgabe erfolgreich angewendet.

Die erfindungsgemäße Vorrichtung zur Entfernung von Zahnapplikationen weist ein Übertragungselement zur Übertragung einer Kraft auf die Applikation auf, wodurch sich die Applikation vom Zahn löst. Erfindungsgemäß ist das Übertragungselement dabei mit einem Impulsleiter ausgestattet, der einen Impuls auf eine Austrittsgrenzfläche des Impulsleiters leitet, die den Impuls auf die Applikation überträgt. Die Austrittsgrenzfläche des Impulsleiters liegt dabei an der Außenfläche der Applikation an, so dass der Impuls nahezu verlustfrei auf die Applikation übertragen wird. Die Stärke des Impulses kann dabei individuell auf die verwendete Zahnapplikation abgestimmt werden. Je nach verwendetem Kleber oder Material der Zahnapplikation kann der Impuls hinsichtlich der Amplitude und der Frequenz der Stoß- bzw. Druckwelle entsprechend der Zahnapplikation angepasst werden.

Nach einer ersten Ausführungsform der vorliegenden Erfindung weist das Übertragungselement eine Eintrittsgrenzfläche auf, auf die eine Masse wirkt, indem die Masse durch Beschleunigungsmittel auf eine vorbestimmbare Auftreffgeschwindigkeit beschleunigt wird und beim Auftreffen auf die Eintrittsgrenzfläche den Impuls in den Impulsleiter des Übertragungselements einkoppelt. Je nach verwendeter Masse und vorbestimmbarer Auftreffgeschwindigkeit, d. h. Beschleunigung der Masse, kann die Amplitude und die Frequenz des Impulses eingestellt werden. Hierzu dient auch das Masseverhältnis zwischen der beschleunigten Masse und dem Übertragungselement, das ggf. mehrteilig ausgebildet sein kann. So ist es bsw. möglich, die Eintrittsgrenzfläche direkt am Impulsleiter selbst vorzusehen, so dass der Impuls unmittelbar durch den Impulsleiter an die Austrittsgrenzfläche übertragen wird.

In einer anderen Ausbildung der Erfindung kann das Übertragungselement ein Zwischenelement aufweisen, dass zwischen dem Impulsleiter und der Eintrittsgrenzfläche gelagert ist, bevorzugt die Eintrittsgrenzfläche aufweist, so dass der Impulsleiter auswechselbar gestaltet werden kann und derart am Zwischenelement lagerbar ist, dass sich der Impuls über das Zwischenelement auf den Impulsleiter überträgt. Der Impulsleiter kann dann schnell zur Reinigung abgenommen werden. Die Eintrittsgrenzfläche ist dann mit Vorteil am Zwischenelement des Übertragungselements vorgesehen. Je nach Ausführung und Art des Zwischenelements können Frequenz und Amplitude des Impulses dann eingestellt werden.

Sowohl der Impulsleiter als auch die Masse bestehen mit Vorteil aus einer gehärteten Metalllegierung, wie bsw. einer Stahl-Titanlegierung. Sofern das Übertragungselement neben dem Impulsleiter auch ein Zwischenelement aufweist, kann als Zwischenelement bsw. ein Metall einer anderen Legierung verwendet werden, so dass der Impuls durch innere Verformung des Zwischenelements abgedämpft wird und dadurch bspw. eine kleinere Frequenz bei selber Amplitude auf der Austrittsgrenzfläche des Impulsleiters entsteht.

In einem nicht beanspruchten Beispiel weist das Übertragungselement eine Eintrittsgrenzfläche auf, auf die ein piezoelektrisches Element derart wirkt, dass der Impuls mittels des piezoelektrischen Elements in den Impulsleiter eingekoppelt wird. Auch hier können Amplitude und Frequenz des Impulses mittels der Ausbildung des piezoelektrischen Elements und der elektrischen Leistung bestimmt werden.

Mit Vorteil überträgt der Impulsleiter einen als Druckwelle oder als Stoßenergie ausgebildeten Impuls derart auf die Austrittsgrenzfläche, dass diese einen vorbestimmbaren Hub von vorzugsweise 10µm bis 2000µm, insbesondere von 10µm bis 500µm derart auf die Applikation überträgt, dass diese sich vom Zahn löst. Die Applikation wird durch einen kurzen Stoßimpuls sozusagen "abgeschlagen". Es hat sich überraschenderweise gezeigt, dass mit einem solchen Verfahren die Zahnapplikation wie bsw. Brackets von Zahnspangen sicher, schnell und nahezu schmerzfrei entfernt werden können ohne dabei den Zahn zu beschädigen. Ein auf diese Art und Weise entferntes Bracket kann in der Regel auch wieder aufgearbeitet und verwendet werden.

Gemäß der Erfindung ist die Masse in einem Zylinder bewegbar und der Zylinder koaxial zum proximalen Ende des Impulsleiters angeordnet. Das Übertragungselement besteht aus dem Impulsleiter, der die Eintrittsgrenzfläche und die Austrittsgrenzfläche aufweist, so dass die beschleunigte Masse auf das proximale Ende, d. h. die Eintrittsgrenzfläche des Impulsleiters auftrifft. An der der Eintrittsgrenzfläche des Übertragungselements abgewandten Seite des Zylinders wirken dabei bevorzugt Druckmittel auf die Masse ein, die diese auf die vorbestimmbare Auftreffgeschwindigkeit beschleunigen.

Nachdem die Masse ihre kinetische Energie in den Impulsleiter in Form eines Impulses eingekoppelt hat, dienen bevorzugt Rückholmittel zum Rückholen der Masse nach dem Auftreffen auf die Eintrittsgrenzfläche wieder in Richtung der Druckmittel. Als Druckmittel oder Rückholmittel können dabei pneumatische, hydraulische, elektromagnetische oder elektromechanische Mittel eingesetzt werden. Auch mechanische Mittel wie bsw. vorgespannte Federn können zur Beschleunigung der Masse herangezogen werden. Auch die Gravitation kann als Beschleunigungsmittel dienen.

Das Übertragungselement und der Zylinder sind in einem Gehäuse federnd oder dämpfend gelagert, so dass sich der Impuls nicht oder nur geringfügig auf das Gehäuse überträgt, das von der Bedienperson in der Regel in der Hand gehalten wird. Der Impulsleiter, der vorteilhafterweise aus einem Metall besteht und eine der Oberfläche der Applikation angepasste, vorzugsweise stumpfe Austrittsgrenzfläche aufweist, überträgt dadurch nahezu verlustfrei den Impuls auf die Applikation. Für schwierige Anwendungsfälle im hinteren Mundbereich, kann der Impulsleiter auch gekrümmt sein.

Nach einer weiteren vorteilhaften Ausbildung der Erfindung befinden sich zwischen dem Übertragungselement und dem lagernden Gehäuse Stellmittel, die das Übertragungselement nach dem Auftreffen der Masse auf die Eintrittsgrenzfläche rückstellen bzw. die Auslenkung des Übertragungselements steuern und begrenzen. Diese Stellmittel können gleichzeitig zur Lagerung des Übertragungselements verwendet werden, oder aus einem hülsenförmigen Zwischenelement bestehen, das sowohl zur Lagerung als auch zur Dämpfung bzw. Einstellung des Impulses und Rückstellung des Übertragungselements nach dem Auftreffen der Masse dient.

Mit Vorteil weist das proximale Ende des Impulsleiters Auffangmittel auf, um die abgelöste Applikation aufzufangen. Dadurch wird ein Verschlucken der Applikation vermieden.

Die vorliegende Anmeldung beschreibt darüber hinaus ein Verfahren zur Entfernung von Zahnapplikationen wie bsw. Brackets, wobei mittels eines Übertragungselements eine Kraft auf die Applikation ausgeübt wird, so dass sich diese vom Zahn löst. Im Verfahren wird der Impuls auf die Applikation übertragen, indem ein Impulsleiter einen in einer Eintrittsgrenzfläche des Übertragungselements eingekoppelten Impuls auf die Applikation überträgt. Dabei ist es auch möglich, eine Folge von Impulsen in zeitlich vorbestimmbaren Abständen zu übertragen.

Der Impuls wird durch das Abbremsen einer Masse an der Eintrittsgrenzfläche des Übertragungselements in das proximale Ende des Impulsleiters, ggf. über ein Zwischenelement, eingekoppelt und aus einer distalen Austrittsgrenzfläche des Impulsleiters durch das Beschleunigung der Applikation ausgekoppelt. Die Austrittsgrenzfläche ist dabei mit der Oberfläche der Applikation kontaktiert.

Eine bevorzugte Ausführungsform der vorliegenden Erfindung wird an hand der beigefügten Zeichnung näher erläutert. Dabei zeigen:
- Fig. 1: einen Querschnitt durch eine bevorzugte Ausführungsform der erfindungsgemäßen Vorrichtung,
- Fig. 2: eine spezielle Ausführungsform des erfindungsgemäßen Impulsleiters,
- Fig. 3: eine bevorzugte Ausführungsform des Übertragungselements mit spezieller Austrittsgrenzfläche, und
- Fig. 4: eine zweite bevorzugte Ausführungsform des Übertragungselements mit spezieller Austrittsgrenzfläche.

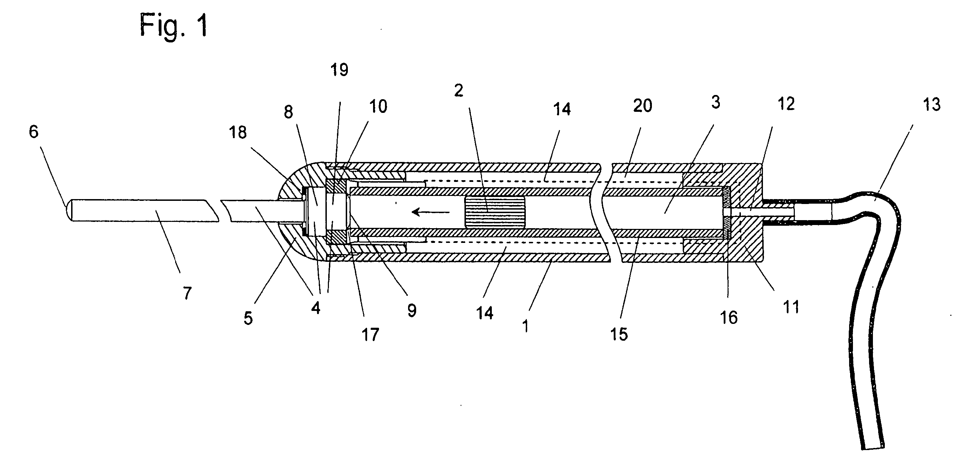

Fig. 1 zeigt ein Übertragungselement 4, das einen Impulsleiter 7 mit einer Austrittsgrenzfläche 6 und einer Eintrittsgrenzfläche 9 aufweist. Das Übertragungselement 4 ist durch ein Führungselement 8 in einer distalen Kappe 5 gelagert, die lösbar, insbesondere schraub- oder steckbar in einem Gehäuse 1 angebracht ist. Als Führungselement 8 kommt mit Vorteil ein entsprechend ausgebildetes proximales Ende des Impulsleiters 7 zum Einsatz, der durch eine entsprechende Querschnittsvergrößerung in der distalen Kappe 5 axial und radial gelagert wird.

Koaxial zum Übertragungselement 4 ist ein Zylinder 15 angeordnet, in dem eine Masse 2 beweglich gelagert wird. Die Masse 2 kann sich im Hubraum 3 des Zylinders 15 von einem proximalen Anschlag 16 bis zur Eintrittsgrenzfläche 9 des Übertragungselements 4 bewegen. Der Anschlag 16 ist mit einem Anschluss 12 verbunden, an den eine Zuführleitung 13 angeschlossen werden kann. Durch die Zuführleitung können bsw. pneumatische oder hydraulische Druckmittel eingespeist werden, die die Masse 2 in Richtung der Eintrittsgrenzfläche 9 beschleunigen.

Durch einen Ringschlitz 17 zwischen dem Übertragungselement 4 und dem Zylinder 15 kann sich vor der Masse 2 befindliche Luft oder flüssige Medium in eine Druckkammer bewegen, die sich zwischen dem Zylinder 15 und dem Gehäuse 1 befindet. Das proximale Ende des Zylinders 15 ist über eine proximalen Kappe 11 mit dem Gehäuse 1 ggf. lösbar verbunden. Das distale Ende des Zylinders 15 wird entweder durch eine Hülse 10 gelagert, die des Weiteren zur Festlegung des Übertragungselements 4 dient, oder durch die in Fig. 1 gezeigte konische Ausformung der Eintrittsgrenzfläche 9. Die Hülse 10 dient zur weiteren axialen und radialen Lagerung des Übertragungselements 4 in der distalen Kappe 5.

Zwischen dem Übertragungselement 4 und der distalen Kappe 5 sind weiterhin Stellmittel 18 eingebettet, die die axiale Auslenkung des Übertragungselements 4 beim Auftreffen der Masse 2 beschränken und steuern. Als Stellmittel 18 kann ein O-Ring aus Metall oder einem elastischen Kunststoff zum Einsatz kommen. Die Stellmittel 18 sind auswechselbar in eine entsprechende Nut der Kappe 5 eingelegt, die auch das Führungselement 8 des Übertragungselements 4 lagert.

Der Impulsleiter 7 hat eine längliche Form, um einen einfachen Zugang zur Zahnapplikation und eine ungehinderte Sicht auf das Behandlungsfeld zu gewährleisten. Eine Austrittsgrenzfläche ist derart ausgebildet, dass sie an der Zahnapplikation gut ansetzen kann.

Besonders vorteilhaft ist die Einbringung eines Zwischenelements (19), als Teil des Übertragungselements (4). Das Zwischenelement (19) ist dabei in vorteilhafter Weise zwischen dem Impulsleiter (7) und der Eintrittsgrenzfläche (9) gelagert, weist bevorzugt die Eintrittsgrenzfläche (9) selbst auf, so dass der Impulsleiter auswechselbar am Zwischenelement (19) lagerbar ist. Der Impulsleiter kann dann zur Reinigung und Desinfektion schnell abgenommen werden. Zu diesem Zweck ist die Kappe 5 zweiteilig gestaltet, so dass der vordere Teil mit dem Impulsleiter abgenommen werden kann, während der hintere Teil das Zwischenelement (19) und die Hülse 10 am Zylinder 15 lagert.

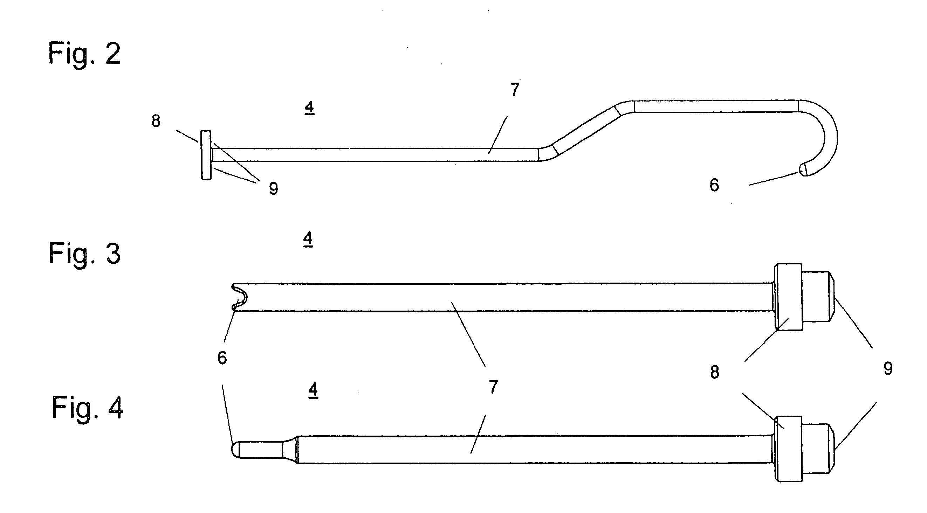

Fig. 2 zeigt eine spezielle Ausführungsform eines Übertragungselements 4, das aus einem gekrümmten Impulsleiter 7 und einem Führungselement 8 besteht, das bsw. auf dem Impulsleiter 7 aufgeschraubt wird oder eingesteckt ist. Das Führungselement 8 weist dabei auch die Eintrittsgrenzfläche 9 auf, in die der Impuls eingekoppelt wird. Die Eintrittsgrenzfläche 9 befindet sich hier auf der "Vorderseite" des Führungselements 8, d.h. an der dem Impulsleiter 7 zugewandten Seite. Zu diesem Zweck befindet sich das Führungselement 8 im proximalen Ende des Zylinders 15, die Masse 2 weist dann eine zentrale Bohrung auf und bewegt sich schienenartig auf dem Impulsleiter 7 bzw. einem geeigneten Zwischenelemnt 19 vom distalen Ende zum proximalen Ende des Zylinders 15 und trifft dort auf die Eintritsgrenzfläche 9. Der magnetrische Anschlag 16 und die Druckluftzuführung sind dann am distalen Ende des Zylinders angebracht, ggf. kann die Druckluft auch über eine zweiteilige, schalenförmige Druckkammer 14 vom proximalen Ende in einer äusseren Ringschicht 20 (gestrichelt in Fig. 1 angedeutet) dem distalen Ende zugeführt werden. Durch die Krümmung des Impulsleiters 7 können auch im hinteren Mundbereich leicht Zahnapplikationen in Richtung der Mundöffnung entfernt werden.

Fig. 3 und 4 zeigen spezielle Ausführungsformen des Übertragungselements 4 mit Impulsleiter 7, Führungselement 8 und Eintrittsgrenzfläche 9. Die Austrittsgrenzfläche 6 kann rund, konkav oder mit einer ausgeformten Aufnahmeöffnung ausgestatten sein, um derart in der Zahnapplikation eingesetzt zu werden, dass der Impulsleiter in der Applikation eine ideale Angriffsgeometrie vorfindet. Bevorzugt wird hingegen eine stumpfe Austrittsgrenzfläche, da spitze Geometrien eher die Tendenz aufzeigen, das Bracket zu zerstören. Zum Schutz des Zahnes vor einer ungewollten Beaufschlagung mit dem Impulsleiter 7 kann die Austrittsgrenzfläche 6 hinsichtlich Ihrer Rotationsachse auch asymmetrisch ausgebildet sein (Fig. 4), z. B. als stumpfe Schraubenzieherform mit einer parallel zur Zahnoberfläche verlaufenden Klingenform in einigen Millimetern Abstand zum Zahn.

Durch die auswechselbar gestaltete distale Kappe 5 können unterschiedliche Impulsleiter 7 in demselben Gehäuse 1 eingesetzt werden, je nach zu entfernender Zahnapplikation.

Die in Fig. 1 gezeigte bevorzugte Ausführungsform hat einen pneumatischen Antrieb, wobei Druckluft durch die Zuführleitung 13 in den Zylinder 15 eingespeist wird und die Masse 2 in Richtung des Impulsleiters 7 beschleunigt. Die Luft entweicht durch den Ringschlitz 17 in die Druckkammer 14, so dass die Masse 2 nach dem Auftreffen auf der Eintrittsgrenzfläche 9 wieder in die Ausgangslage zurückgedrückt wird. Wahlweise kann der Anschlag 16 auch magnetisch ausgebildet sein, um die Masse 2 wieder in die Ausgangslage rückzustellen. Als Stellmittel 18 kommt ein O-Ring aus Gummi zum Einsatz, so dass das Übertragungselement 4 federnd gegenüber dem Gehäuse bzw. der Kappe gelagert ist. Dadurch wird eine Übertragung des Impulses auf das Gehäuse 1 vermieden und der Gesamthub des Impulsleiters 7 bzw. des Übertragungselements 4 kann so eingestellt werden.

Nach dem Auftreffen der Masse 2 wird das Übertragungselement 4 durch die Stellmittel 18 wieder in die Ausgangslage zurückgeschoben, des weiteren wird der Innenraum des Gehäuses durch die abdichtende Funktion des O-Rings 18 abgedichtet.

Zur Aufbereitung des Druckluftpulses für die Beschleunigung der Masse 2 können die dafür notwendigen pneumatischen Komponenten, wie Druckminderer, Schaltventile und Anzeigeninstrumente, in einem separaten Tischgehäuse angeordnet sein. Das Gehäuse 1 mit der Masse 2 und dem Impulsleiter 7 ist dann über die flexible Schlauchleitung 13 mit dem Tischgehäuse verbunden. Aus Gründen der Einfachheit können diese Komponenten aber auch in dem Gehäuse 1 untergebracht sein, das dann alle notwendigen Bauteile enthält. Der Druckluftanschluss 12 könnte dann über einen Turbinenanschluss erfolgen, oder über eine integrierte Druckluftpatrone. Bei letztgenannter Ausführungsform entfällt jegliche Schlauchverbindung. Das Gerät arbeitet autonom und ist sogar mobil einsetzbar.

Zweckmäßigerweise ist die Vorrichtung für eine Folge von mehreren Einzelimpulsen ausgelegt. Die Masse 2 ist daher nach einer bevorzugten Ausführungsform der Erfindung selbstständig in seine Ausgangsposition rückstellbar. Neben der vorbeschriebenen Druckkammer 14 oder einem magnetischen Anschlag 16 könnte auch eine im Zylinder 15 eingelagerte Feder für die Rückstellung der Masse 2 herangezogen werden. Als Masse 2 kann ein längliches oder kugelförmiges Projektil aus gehärtetem Metall eingesetzt werden.

Durch die abnehmbar gestaltet distale Kappe 5 kann das Übertragungselement 4 aus Gründen der Hygiene leicht abgenommen und so einfach gereinigt, desinfiziert und sterilisiert werden. Auch eine Ausführungsform als Einmalartikel ist denkbar. Auch die proximale Kappe 11 kann auswechselbar gestaltet werden, um unterschiedliche Druckmittel anschließen zu können.

Eine weitere bevorzugte Ausgestaltung der vorliegenden Erfindung ist die Vorsehung eine Auffang- oder Haltevorrichtung für die Zahnapplikation. Es hat sich nämlich gezeigt, dass nach dem Lösen der Verbindung mit der erfindungsgemäßen Vorrichtung die Zahnapplikation oder Teile davon umher fliegen. Der Patient könnte diese verschlucken oder Sie sogar in seine Atemwege bekommen. Durch die in Fig. 2 gezeigte gekrümmte Ausführungsform des Impulsleiters 7 erfolgt der Impuls in Richtung des Gehäuses 1, so dass die abgelöste Applikation nicht in die hintere Rachenhöhle fällt, sondern in Richtung des Geräts.

## Patentansprüche

1. Vorrichtung zur Entfernung von Zahnapplikationen wie Brackets, mit
einem Übertragungselement (4) zur Übertragung einer Kraft auf die Applikation, wodurch sich die Applikation vom Zahn löst,
wobei das Übertragungselement (4) einen Impulsleiter (7) zur Übertragung eines Impulses und eine Austrittsgrenzfläche (6) aufweist, die den Impuls auf die Applikation überträgt,
wobei das Übertragungselement (4) eine Eintrittsgrenzfläche (9) aufweist, auf die eine Masse (2) wirken kann, indem die Masse (2) durch Beschleunigungsmittel auf eine vorbestimmbare Auftreffgeschwindigkeit beschleunigt wird und beim Auftreffen auf die Eintrittsgrenzfläche (9) den Impuls in den Impulsleiter (7) des Übertragungselements (4) einkoppelt, und
wobei die Masse (2) in einem Zylinder (15) bewegbar und der Zylinder (15) koaxial zum proximalen Ende des Impulsleiter (7) angeordnet ist, **dadurch gekennzeichnet,**
**dass** das Übertragungselement (4) und der Zylinder (15) in einem Gehäuse (1) federnd oder dämpfend gelagert ist, so dass sich der Impuls nicht oder nur geringfügig auf das Gehäuse (1) überträgt.

2. Vorrichtung nach Anspruch 1,
**dadurch gekennzeichnet,**
**dass** der Impulsleiter (7) einen als Druckwelle oder als Stossenergie ausgebildeten Impuls derart auf die Austrittsgrenzfläche (6) überträgt, dass diese einen vorbestimmbaren Hub von vorzugsweise 10µm bis 2000µm derart auf die Applikation überträgt, dass diese sich vom Zahn löst.

3. Vorrichtung nach einem der vorhergehenden Ansprüche,
**dadurch gekennzeichnet,**
**dass** an der der Eintrittsgrenzfläche (9) des Übertragungselements (4) abgewandten Seite des Zylinders (15) Druckmittel auf die Masse (2) einwirken und diese auf die vorbestimmbare Auftreffgeschwindigkeit beschleunigen, und
**dass** Rückholmittel (14, 16) die Masse (2) nach dem Auftreffen auf die Eintrittsgrenzfläche (9) wieder in Richtung der Druckmittel bewegen.

4. Vorrichtung nach Anspruch 3,
**dadurch gekennzeichnet,**
**dass** ein magnetischer Anschlag (16) als Rückholmittel dient.

5. Vorrichtung nach einem der vorhergehenden Ansprüche,
**dadurch gekennzeichnet,**
**dass** der Impulsleiter (7) aus einem Metall besteht und eine der Oberfläche der Applikation angepasste, vorzugsweise stumpfe Austrittsgrenzfläche (6) aufweist, so dass der Impuls nahezu verlustfrei auf die Applikation übertragbar ist.

6. Vorrichtung nach einem der vorhergehenden Ansprüche,
**dadurch gekennzeichnet,**
**dass** der Impulsleiter (7) gekrümmt ist.

7. Vorrichtung nach einem der vorhergehenden Ansprüche,
**dadurch gekennzeichnet,**
**dass** das Übertragungselement (4) ein Zwischenelement (19) aufweist, dass zwischen dem Impulsleiter und der Eintrittsgrenzfläche (9) gelagert ist, bevorzugt die Eintrittsgrenzfläche (9) aufweist, so dass der Impulsleiter auswechselbar am Zwischenelement (19) lagerbar ist.

8. Vorrichtung nach einem der vorhergehenden Ansprüche,
**dadurch gekennzeichnet,**
**dass** das proximale Ende des Impulsleiters (7) in einer Hülse (10) gelagert ist, die das distale Ende des Zylinders (15) ringförmig umschliesst und im Gehäuse (1) oder einer distalen Kappe (5) gelagert ist, so dass die durch die Masse (2) beim Beschleunigen verdrängte Lift aus dem Zylinder (15) entweichen kann.

9. Vorrichtung nach einem der vorhergehenden Ansprüche,
**dadurch gekennzeichnet,**
**dass** die distale Kappe (5) im Gehäuse (1) lösbar gelagert ist, so dass der Impulsleiter (7) auswechselbar ist.

10. Vorrichtung nach einem der vorhergehenden Ansprüche,
**dadurch gekennzeichnet,**
**dass** sich zwischen dem Übertragungselement (4) und dem Gehäuse (1) Stellmittel (18) befinden, die das Übertragungselement (4) nach dem Auftreffen der Masse (2) auf die Eintrittsgrenzfläche (9) rückstellen und/oder die Auslenkung des Übertragungelements (4) begrenzen.

11. Vorrichtung nach einem der vorhergehenden Ansprüche,
**dadurch gekennzeichnet,**
**dass** das proximale Ende des Impulsleiters (7) Auffangmittel zum Auffangen der abgelösten Applikation aufweist.

12. Vorrichtung nach einem der vorhergehenden Ansprüche,
**dadurch gekennzeichnet,**
**dass** als Beschleunigungsmittel zur Beschleunigung der Masse (2) Gravitation und/oder mechanische, pneumatische, hydraulische, elektromechanische und/oder elektromagnetische Mittel dienen.

13. Vorrichtung nach einem der vorhergehenden Ansprüche,
**dadurch gekennzeichnet,**
**dass** die Masse (2) eine Folge von Impulsen in zeitlich vorbestimmbaren Abständen auf die Eintrittsgrenzfläche (9) übertragen kann.

## Claims

1. A device for removing tooth applications such as brackets, having
a transmission element (4) for transmitting a force to the application, whereby the application is debonded from the tooth,
whereby the transmission element (4) includes an impulse conductor (7) for transmitting an impulse, and an exit boundary surface or output surface (6) transmitting the impulse onto the application,
whereby the transmission element (4) has an entry boundary surface or input surface (9) which can be acted upon by a mass (2), wherein the mass (2) is accelerated to a pre-determinable impact velocity by accelerating means and
when impacting the input surface (9) couples the impulse into the impulse conductor (7) of the transmission element (4), and
whereby the mass (2) is movable inside a cylinder (15) and the cylinder (15) is disposed coaxially to the proximal end of the impulse conductor (7), **characterized in that**
the transmission element (4) and the cylinder (15) are resiliently or with damping mounted inside a casing (1), such that none or only little of the impulse is transmitted to the casing (1).

2. The device according to claim 1,
**characterized in that**
the impulse conductor (7) transmits an impulse in the form of a pressure wave or impact energy to the output surface (6) such that it transmits a pre-determinable stroke of preferably 10µ to 2,000µ (10 microns to 2,000 microns) to the application, such that it is debonded from the tooth.

3. The device according to any one of the preceding claims,
**characterized in that**
pressure means act on the mass (2) at the side of the cylinder (15) facing away from the transmission element (4) and accelerate the mass to the pre-determinable impact velocity, and
**in that** retracting means (14, 16) move the mass, after impacting the input surface (9), back in the direction of the pressure means.

4. The device according to claim 3,
**characterized in that**
a magnetic stop (16) serves as retracting means.

5. The device according to any one of the preceding claims,
**characterized in that**
the impulse conductor (7) consists of a metal and is provided with an output surface (6) adapted to the surface of the application, preferably blunt, such that the impulse may be transmitted to the application nearly without losses.

6. The device according to any one the preceding claims,
**characterized in that**
the impulse conductor (7) is curved.

7. The device according to any one of the preceding claims,
**characterized in that**
the transmission element (7) has an intermediate element (19) which is disposed between the impulse conductor and the input surface (9) and preferably includes the input surface (9) such that the impulse conductor is exchangeably mountable at the intermediate element (19).

8. The device according to any one of the preceding claims,
**characterized in that**
the proximal end of the impulse conductor (7) is mounted inside a bushing (10) which annularly encloses the distal end of the cylinder (15) and is mounted inside the casing (1) or a distal cap (5), such that the air displaced by the mass (2) during acceleration may escape from the cylinder (15).

9. The device according to any one of the preceding claims,
**characterized in that**
the distal cap (5) is releasably mounted in the casing (1), such that the impulse conductor (7) is exchangeable.

10. The device according to any one of the preceding claims,
**characterized in that**
setting means (18) are located between the transmission element (4) and the casing (1), the setting means (18) retracting the transmission element (4) after the impact of the mass (2) on the input surface (9) and/or limiting the displacement of the transmission element (4).

11. The device according to any one of the preceding claims,
**characterized in that**
the proximal end of the impulse conductor (7) is provided with capture means for capturing the debonded application.

12. The device according to any one of the preceding claims,
**characterized in that**
gravitational force and/or a mechanical, pneumatic, hydraulic, electromechanical and/or electromagnetic means serve as acceleration means for accelerating the mass (2).

13. The device according to any one of the preceding claims,
**characterized in that**
the mass (2) can transmit a series of impulses in pre-determinable time intervals to the input surface (9).

## Revendications

1. Dispositif pour enlever des applications dentaires, comme des brackets, comprenant
un élément de transmission (4) pour transmettre une force à l'application, grâce à quoi l'application se détache de la dent,
dans lequel l'élément de transmission (4) comprend un directeur d'impulsion (7) pour transmettre une impulsion, et une surface de délimitation de sortie (6) qui transmet l'impulsion à l'application,
dans lequel l'élément de transmission (4) comprend une surface de délimitation d'entrée (9) sur laquelle peut agir une masse (2) en ce que la masse (2) est accélérée par des moyens d'accélération à une vitesse incidente capable d'être prédéterminée et, lors de l'incidence sur la surface de délimitation d'entrée (9), elle injecte l'impulsion dans le directeur d'impulsion (7) de l'élément de transmission (4), et
dans lequel la masse (2) est agencée mobile dans un cylindre (15) et le cylindre (15) est agencé coaxialement à l'extrémité proximale du directeur d'impulsion (7),
**caractérisé en ce que**
l'élément de transmission (4) et le cylindre (15) sont montés de façon élastique ou amortie dans un boîtier (4) de telle façon que l'impulsion n'est pas transmise, ou n'est que faiblement transmise au boîtier (1).

2. Dispositif selon la revendication 1,
**caractérisé en ce que** le directeur d'impulsion (7) transmet une impulsion, réalisée à la manière d'une onde de pression ou d'une énergie par à-coups, à la surface de délimitation de sortie (6) de telle manière que celle-ci transmet à l'application une course capable d'être prédéterminée, de préférence de 10 µm à 2000 µm, de sorte que celle-ci se détache de la dent.

3. Dispositif selon l'une des revendications précédentes,
**caractérisé en ce que**, des moyens de compression agissent sur la masse (2) sur le côté du cylindre (15) détourné de la surface de délimitation d'entrée (9) de l'élément de transmission (4) et accélère ladite masse à la vitesse incidente prédéterminée, et
**en ce que** des moyens de rappel (14, 16) déplacent la masse (2) à nouveau en direction des moyens de compression après l'incidence sur la surface de délimitation d'entrée (9).

4. Dispositif selon la revendication 3,
**caractérisé en ce qu'**une butée magnétique (16) sert de moyen de rappel.

5. Dispositif selon l'une des revendications précédentes,
**caractérisé en ce que** le directeur d'impulsion (7) est en métal et comprend une surface de délimitation de sortie (6) adaptée à la surface de l'application, de préférence émoussée, de sorte que l'impulsion est transmissible pratiquement sans perte à l'application.

6. Dispositif selon l'une des revendications précédentes,
**caractérisé en ce que** le directeur d'impulsion (7) est incurvé.

7. Dispositif selon l'une des revendications précédentes,
**caractérisé en ce que** l'élément de transmission (4) comprend un élément intermédiaire (19) qui est monté entre le directeur d'impulsion et la surface de délimitation d'entrée (9) et qui comporte de préférence la surface de délimitation d'entrée (9), de sorte que le directeur d'impulsion est susceptible d'être monté de façon interchangeable sur l'élément intermédiaire (19).

8. Dispositif selon l'une des revendications précédentes,
**caractérisé en ce que** l'extrémité proximale du directeur d'impulsion (7) est montée dans une douille (10) qui entoure de façon annulaire l'extrémité distale du cylindre (15) et qui est montée dans le boîtier (1) ou dans un capuchon distal (5), de sorte que l'air refoulé hors du cylindre (15) par la masse (2) lors de l'accélération peut s'échapper.

9. Dispositif selon l'une des revendications précédentes,
**caractérisé en ce que** le capuchon distal est monté de façon détachable dans le boîtier (1), de sorte que le directeur d'impulsion (7) est interchangeable.

10. Dispositif selon l'une des revendications précédentes,
**caractérisé en ce que** des moyens de positionnement (18) sont situés entre l'élément de transmission (4) et le boîtier (1), lesquels rappellent l'élément de transmission (4) après l'incidence de la masse (2) sur la surface de délimitation d'entrée (9) et/ou limitent la déflexion de l'élément de transmission (4).

11. Dispositif selon l'une des revendications précédentes,
**caractérisé en ce que** l'extrémité proximale du directeur d'impulsion (7) comprend des moyens de réception pour recevoir l'application détachée.

12. Dispositif selon l'une des revendications précédentes,
**caractérisé en ce que** des moyens à gravitation et/ou mécaniques, pneumatiques, hydrauliques, électromécaniques et/ou électromagnétiques servent à titre de moyens d'accélération pour accélérer la masse (2).

13. Dispositif selon l'une des revendications précédentes,
**caractérisé en ce que** la masse (2) est capable de transmettre une succession d'impulsions à des écarts temporels prédéterminés sur la surface de délimitation d'entrée (9).
